# EUROPÄISCHE PATENTSCHRIFT

(11) **EP 0 529 511 B1**
(45) Veröffentlichungstag und Bekanntmachung des Hinweises auf die Patenterteilung: **07.06.1995**
(21) Anmeldenummer: 92114211.3
(22) Anmeldetag: 20.08.1992
(51) Int. Cl.: G11B 23/087

(54) **Minikassette mit Linearanzeige**
Mini cassette with linear indication device
Mini cassette avec dispositif d'indication linéaire

(30) Priorität: 30.08.1991 DE 4128824
(43) Veröffentlichungstag der Anmeldung: 03.03.1993
(73) Patentinhaber: Grundig E.M.V. Elektro-Mechanische Versuchsanstalt Max Grundig GmbH & Co. KG, 90762 Fürth (DE)
(72) Erfinder: Barth, Wolfgang, Grundig E.M.V. Max Grundig, W-8510 Fürth/Bay (DE); Göckeritz, Peter, Dipl.-Ing., Grundig E.M.V., Kurgartenstrasse 37, W-8510 Fürth/Bay (DE); Siebdraht, Dieter, Grundig E.M.V., Kurgartenstrasse 37, W-8510 Fürth/Bay (DE)

(56) Entgegenhaltungen:
- EP-A- 0 102 447
- DE-A- 1 927 532
- DE-A- 1 950 200
- DE-A- 3 639 818
- US-A- 3 630 170

## Beschreibung

Die Erfindung betrifft eine Magnetbandkassette nach dem Oberbegriff des Anspruchs 1.

Die der Erfindung zugrundeliegende Magnetbandkassette ist in DIN 32750,Teil 1 genormt. Es handelt sich dabei um eine Magnetbandkassette für Diktierzwecke. Das Magnetband ist dabei auf zwei koplanaren flanschlosen Wickelkernen aufgespult, zwischen denen es umspulbar ist. Der Antrieb dazu erfolgt geräteseitig von einem Wickeldorn, der in den momentanen Aufwickel-Wickelkern eingreift. Da es sich um eine Wendekassette handelt, ist jeder der beiden Wickelkerne von Fall zu Fall Aufwickel-Wickelkern. Die Antriebsdrehzahl des Aufwickel-Wickelkerns ist konstant und wertmäßig in DIN 32750, Teil 1 festgelegt.

Die für den Betrieb mit dieser Magnetbandkassette verwendeten Geräte sind in vielen Fällen mit Bandstellenanzeigen ausgerüstet, die von Bandanfang bis zum Bandende immer die momentan angefahrene Bandstelle anzeigen. Nachteilig ist dabei allerdings, daß bei Entnahme der Kassette und Wiedereinsatz im gewendeten Zustand, oder bei Einsatz einer anderen Kassette mit beliebiger Bandverteilung auf den beiden Wickelkernen die geräteseitige Bandstellenanzeige nicht mehr mit der tatsächlichen Bandstelle in der Kassette übereinstimmt.

Dieser Mangel kann durch eine in der Magnetbandkassette integrierte Bandstellenanzeige beseitigt werden.

Eine diesbezügliche Magnetbandkassette wird in dem deutschen Gebrauchsmuster G 7417061 offenbart. Die darin beschriebene Kassette besitzt einen in der Mitte der Längsseite der Kassette gelagerten Zeiger, wobei sich der Lagerpunkt an der vorderen (kopfseitigen) oder hinteren Längsseite des Kassettengehäuses befindet. Der Zeiger weist zwei Nocken auf, die in dem zwischen den beiden Bandwickeln engsten Bereich beidseitig auf dem Zeiger sitzen, die Bandwickel abtasten und den Zeiger entsprechend der Bandverteilung bewegen, so daß auf einer Skala die angefahrene Bandstelle angezeigt wird.

Diese Art der Bandstellenanzeige ist jedoch mit einigen Mängeln behaftet. So ändert sich zum einen der Abstand zwischen den Außenseiten der Bandwickel während des Umspulens des Magnetbandes laufend, so daß die beiden Nocken sich meist zwischen den Bandwickeln frei bewegen können, was zu einer unruhigen Bandstellenanzeige führt, zum anderen ist die Anzeige, bedingt durch eine relativ kurze Skala, ziemlich ungenau.

Aus der deutschen Offenlegungsschrift 2709142 ist ein Bandlängenanzeiger bekannt, bei dem ein Zeiger über ein zweiteiliges Federelement an den Bandwickeln anliegt. Dadurch ist der obengenannte Mangel der unruhigen Anzeige behoben, die relativ ungenaue Anzeige ist aber auch hier vorhanden.

Es ist wünschenswert im Hinblick auf eine bessere Bandstellenanzeige, die Anzeige genauer zu machen, was eine größere Anzeigelänge und dadurch mögliche feinere Unterteilung der Skala erfordert.

In DE-A1-3639818 ist eine bekannte, in DIN 32750, Teil 2 genormte Diktierkassette offenbart, die zur Bandstellenanzeige eine über einen großen Teil der Kassettenlänge reichende Skala aufweist. Im Inneren der Kassette ist auf einer nichtlinearen Gewindespindel ein Skalenzeiger gelagert. Die nichtlineare Gewindespindel wird vom abwickelnden Wickelkern über zwei Zahnräder, einer Schnecke und einem auf der Gewindespindel gelagerten Schneckenrad angetrieben.

Eine derartige Lösung wäre auch für die im Oberbegriff des Patentanspruchs 1 genannte Diktierkassette anzustreben, kann aber wegen der in DIN 32750, Teil 1 genormten wesentlich kleineren Magnetbandkassette nicht realisiert werden.

Aufgabe der Erfindung ist es, eine Magnetbandkassette nach dem Oberbegriff des Anspruchs 1 mit einer Bandstellenanzeige auszugestalten, die sich über einen großen Bereich der Kassettenlänge erstreckt.

Diese Aufgabe wird durch die im Anspruch 1 gekennzeichneten Merkmale gelöst.

Die Unteransprüche zeigen vorteilhafte Ausgestaltungen der Erfindung auf.

Anspruch 1 beschreibt die Ausgestaltung der Zähne auf dem Wickelkern, die in ihrer Form aus Platz- und Toleranzgründen nicht einer genormten Verzahnung, z.B. Evolventen-Verzahnung, entsprechen können.

In Anspruch 3 ist die Gestaltung der Zähne des Zwischenrades aufgezeigt, die aus den gleichen Gründen wie in Anspruch 2 genannt, auch nicht einer genormten Verzahnung entsprechen können.

Die Ansprüche 4 und 5 beschreiben die erfindungsgemäße Ausgestaltung des Spindelrades.

Im Anspruch 6 ist die Ausführung der Gewindespindel für lineare und nichtlineare Bandstellenanzeige beschrieben.

Die beiden Ansprüche 7 und 8 zeigen verschiedene Skalenausführungen auf.

Anspruch 9 beschreibt die besonders platzsparende Art, das Anzeigeelement in Abhängigkeit von der Bandverteilung in der Magnetbandkassette zu bewegen.

In Anspruch 10 ist eine Möglichkeit aufgezeigt, die spiralformige Nut aus Anspruch 1 durch eine spiralformige Erhebung zu ersetzen.

Die Erfindung wird nachstehend anhand der Zeichnungen näher erläutert. Es zeigen
- Fig. 1: einen Blick in eine geöffnete erfindungsgemäße Magnetbandkassette,
- Fig. 2: einen Schnitt durch die Kassette entlang der Linie A-A aus Fig. 1,
- Fig. 3: eine vergrößerte Darstellung der Bewegungsübertragung vom Wickelkern zur Gewindespindel und die erfindungsgemäße Ausgestaltung der Zähne.

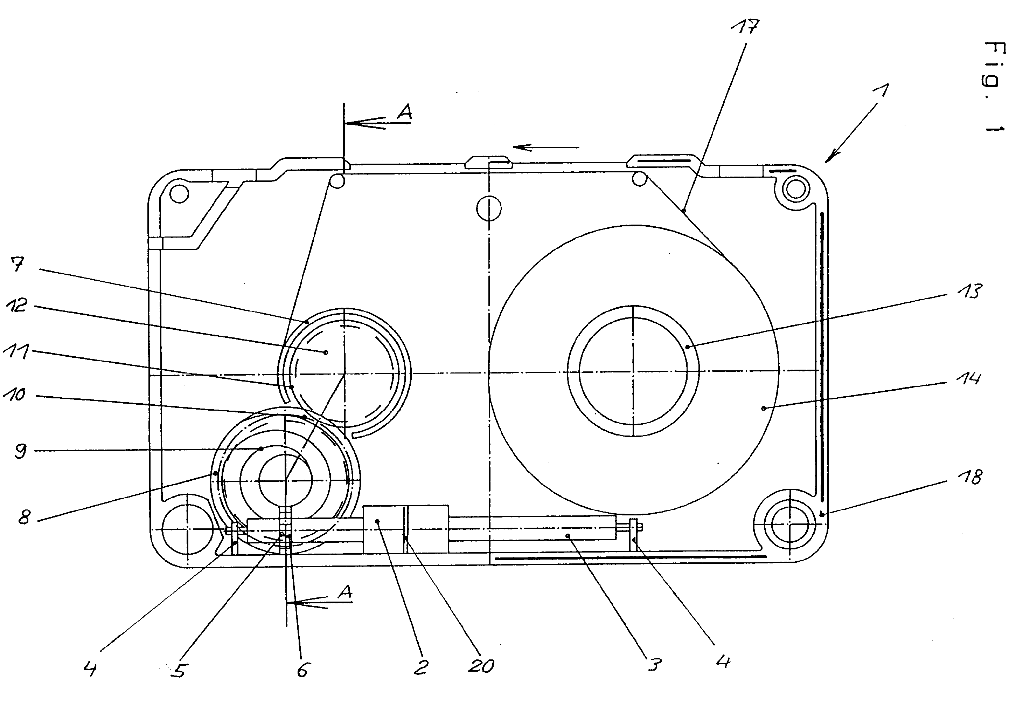

Die Fig. 1 zeigt die geöffnete Magnetbandkassette mit dem erfindungsgemäßen Antrieb der Bandstellenanzeige. Der aufwickelseitige Wickelkern 12 treibt über die Zahnsegmente 11 das Zwischenrad 8 an. Auf dem Zwischenrad 8 ist auf einer Planseite eine spiralförmige Nut 9 eingeformt, die wiederum die Zähne 6 des Spindelrades 5 umgreift und das Spindelrad 5 mit der Gewindespindel 3 antreibt. Die Gewindespindel 3 ist für den Fall einer linearen Bandstellenanzeige mit einem Gewinde mit linearer Steigung versehen. Für andere Ausführungsarten kann die Steigung des Gewindes auch nichtlinear sein. Das Anzeigeelement 2 besitzt ein Innengewinde mit der Steigung des Spindelgewindes. Für andere Ausführungen mit nichtlinearer Steigung des Spindelgewindes weist das Anzeigeelement 2 statt des Innengewindes nur eine in das Spindelgewinde ragende Rippe auf. Das Anzeigeelement 2 trägt außerdem noch mindestens zwei, durch das Fenster in den beiden Kassettenflächen sichtbare Markierungen 20. An diesen Fenstern sind auch die Skalen der Bandstellenanzeige angebracht. Vorzugsweise ist die in der gezeichneten Darstellung nach Fig. 1 zuständige Skala linear und zeitproportional ausgeführt. Die auf der anderen Kassettenseite sich befindliche Skala ist nichtlinear und zeitproportional.

In anderen Ausführungsarten können beide Skalen nichtlinear und zeitproportional ausgeführt werden.

In der Fig. 1 ist die Lage des Anzeigeelementes 2 aus darstellerischen Gründen beliebig dargestellt. Tatsächlich stünde das Anzeigeelement 2 bei der gezeigten Bandverteilung am aufwickelnden Ende (nahe Wickelkern 12) der Gewindespindel 3. Durch diese Anordnung ist der geringe in der Magnetbandkassette vorhandene Raum geschickt ausgenutzt. Das Anzeigeelement 2 bewegt sich immer von der Aufwickel- zur Abwickelseite und weicht damit einer Berührung mit dem Magnetband aus.

Die Gewindespindel 3 ist in zwei Lagern 4 gelagert. Es ist leicht möglich, die Gewindespindel 3 samt Anzeigeelement 2 auszutauschen, wenn die Magnetbandkassette eine andere Bandfüllung, z.B. 2 x 15 Minuten, 2 x 10 Minuten, 2 x 30 Minuten usw. erhalten sollte.

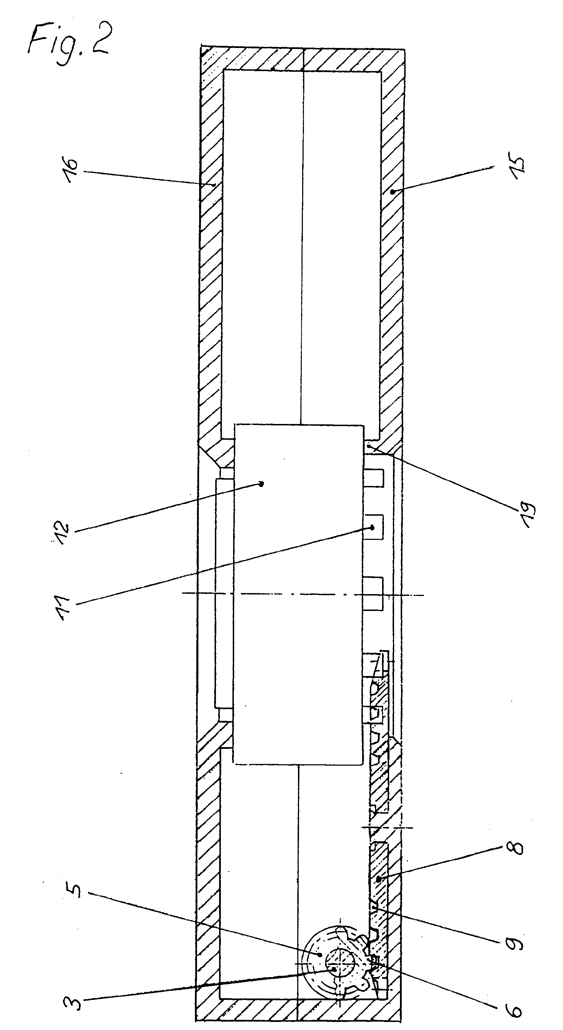

In Fig. 2 ist in einer vergrößerten Schnittdarstellung der Antrieb des Zwischenrades 8 von den Zahnsegmenten 11 zu sehen. Die spindelförmige Nut 9 umgreift einen Zahn 6 des Spindelrades 5. Durch den Punkt 19 der Kassettenhälfte 15 wird der Wickelkern 12 radial entsprechend seiner Bewegungsfreiheit nach DIN 32750, Teil 1 begrenzt.

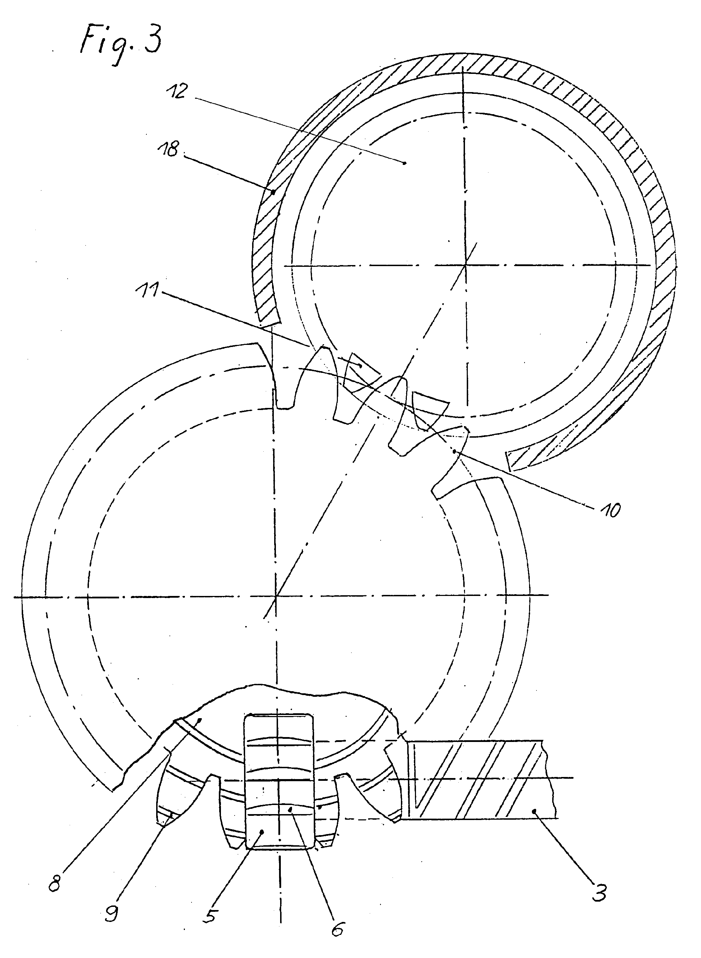

Fig. 3 zeigt deutlich die Ausgestaltung der Zahnsegmente 11, die nur aus dem Teil zwischen Teilkreis und Kopfkreis bestehen. Dadurch wird ein geräteseitig in den Wickelkern eintauchender Mitnehmer nicht behindert. Des weiteren ist in Fig. 3 deutlich die Form der Zähne 6 auf dem Spindelrad 5 zu sehen.

## Patentansprüche

1. Magnetbandkassette (1) für Diktiergeräte mit integrierter Bandstellenanzeige, die mittels eines Anzeigeelementes (2) mit Markierungen (20) auf zwei auf beiden Kassettenhälften (15,16) vorhandene Skalen erfolgt, wobei das Anzeigeelement (2) von einer Gewindespindel (3) angetrieben wird und die Zahl der Umdrehungen des Wickelkerns (12) über ein Zwischenrad (8) auf die Gewindespindel (3) übertragen wird,
**dadurch gekennzeichnet**, daß am Zwischenrad (8) auf einer Planseite eine spiralförmige Nut (9) angebracht ist, daß die spiralförmige Nut (9) die Zähne (6) eines radial zum Zwischenrad (8) gelagerten Spindelrades (5) umgreift und daß die Zahngeometrie des Spindelrades (5) so gestaltet ist, daß die Zähne (6) in die im Bereich der Zwischenradverzahnung unterbrochene spiralförmige Nut (9) problemlos eintauchen können.

2. Magnetbandkassette (1) nach Anspruch 1,
**dadurch gekennzeichnet**, daß am Wickelkern (12) auf einer seiner Planseiten Zahnsegemente (11) ausgebildet sind, deren Geometrie vom Teilkreis bis zum Kopfkreis einer Evolvente angenähert ist und deren Teil zwischen Teilkreis und Fußkreis abgeschnitten ist.

3. Magnetbandkassette (1) nach Anspruch 1,
**dadurch gekennzeichnet**, daß die Stirnverzahnung (10) des Zwischenrades (8) einer Evolventenverzahnung angenähert, im Fußteilbereich der Zähne jedoch wesentlich vertieft ausgebildet ist.

4. Magnetbandkassette (1) nach den Ansprüche 1 bis 3,
**dadurch gekennzeichnet**, daß das Spindelrad (5) eine einer Evolventenverzahnung ähnliche Verzahnung besitzt, wobei jeweils eine Seite der Zähne (6) in der vollen Breite des Spiegelrades (5) abgerundet ist.

5. Magnetbandkassette (1) nach einem der bisherigen Ansprüche,
**dadurch gekennzeichnet**, daß die Breite des Spindelrades (5) den 1,5-fachen Wert der Zahnlückenbreite im Teilkreis des Zwischenrades (8) beträgt.

6. Magnetbandkassette (1) nach einem der bisherigen Ansprüche,
**dadurch gekennzeichnet**, daß die Gewindespindel (3) ein Gewinde mit linearer oder nichtlinearer Steigung aufweist.

7. Magnetbandkassette (1) nach einem der bisherigen Ansprüche,
**dadurch gekennzeichnet**, daß eine erste Skala eine lineare zeitproportionale Anzeige und eine zweite Skala eine nichtlineare und zeitproportionale Anzeige ermöglicht.

8. Magnetbandkassette (1) nach einem der bisherigen Ansprüche,
**dadurch gekennzeichnet**, daß beide Skalen nichtlineare, zeitproportionale Anzeigen aufweisen.

9. Magnetbandkassette (1) nach einem der bisherigen Ansprüche,
**dadurch gekennzeichnet**, daß sich das Anzeigelelement (2) von der Aufwickelseite zur Abwickelseite der Kassette bewegt.

10. Magnetbandkassette (1) nach Anspruch 1,
**dadurch gekennzeichnet**, daß auf einer Planseite des Zwischenrades (8) statt der spiralförmigen Nut (9) sich eine spiralförmige Erhebung (9′) befindet, die von den Zähnen (6) des Spindelrades (5) umgriffen wird.

## Claims

1. Magnetic tape cassette (1) for dictating machines, having integrated tape position indication which is effected by means of an indicating element (2) with markings (20) on two scales provided on both cassette halves (15, 16), the indicating element (2) being driven by a threaded spindle (3) and the number of revolutions of the hub (12) being transmitted via an intermediate wheel (8) to the threaded spindle (3),
characterized in that
a spiral groove (9) is provided on a plane side of the intermediate wheel (8), that the spiral groove (9) embraces the teeth (6) of a spindle wheel (5) supported radially relative to the intermediate wheel (8) and that the tooth geometry of the spindle wheel (5) is so designed that the teeth (6) may easily engage into the spiral groove (9), which is interrupted in the region of the intermediate wheel toothing.

2. Magnetic tape cassette (1) according to claim 1,
characterized in that
formed on one of the plane sides of the hub (12) are toothed quadrants (11), whose geometry from the pitch circle to the tip circle is approximated to an involute and whose part between pitch circle and root circle is cut off.

3. Magnetic tape cassette (1) according to claim 1,
characterized in that
the spur toothing (10) of the intermediate wheel (8) is approximated to an involute toothing but is substantially recessed in the region of the root part of the teeth.

4. Magnetic tape cassette (1) according to claims 1 to 3,
characterized in that
the spindle wheel (5) has a toothing similar to an involute toothing, one side of each of the teeth (6) being rounded-off over the full width of the spindle wheel (5).

5. Magnetic tape cassette (1) according to one of the preceding claims,
characterized in that
the width of the spindle wheel (5) is 1.5 times the tooth space width in the pitch circle of the intermediate wheel (8).

6. Magnetic tape cassette (1) according to one of the preceding claims,
characterized in that
the threaded spindle (3) has a thread with a linear or nonlinear lead.

7. Magnetic tape cassette (1) according to one of the preceding claims,
characterized in that
a first scale enables a linear, time-proportional reading and a second scale enables a nonlinear and time-proportional reading.

8. Magnetic tape cassette (1) according to one of the preceding claims,
characterized in that
both scales have nonlinear, time-proportional readings.

9. Magnetic tape cassette (1) according to one of the preceding claims,
characterized in that
the indicating element (2) moves from the take-up side to the take-off side of the cassette.

10. Magnetic tape cassette (1) according to claim 1,
characterized in that
situated on a plane side of the intermediate wheel (8) there is, instead of the spiral groove (9), a spiral raised portion (9′) which is embraced by the teeth (6) of the spindle wheel (5).

## Revendications

1. Cassette à bande magnétique (1) pour dictaphones avec affichage intégré de la position de la bande, qui s'effectue à l'aide d'un élément d'affichage (2) comportant des repères (20) situés sur deux échelles présentes sur les deux moitiés de cassette (15,16), l'élément d'affichage (2) étant entraîné par une broche filetée (3) et le nombre des rotations du noyau de bobinage (12) étant transmis à la broche filetée (3) à l'aide d'un pignon intermédiaire (8), caractérisée en ce qu'une rainure en spirale (9) est aménagée dans une face plane du pignon intermédiaire (8), que la rainure en spirale (9) coopère avec des dents (6) d'un pignon (5) de la broche, qui est monté radialement par rapport au pignon intermédiaire (8) et que la géométrie des dents du pignon (5) de la broche est conçue de telle sorte que les dents (6) peuvent pénétrer sans problèmes dans la rainure en spirale (9), qui est interrompue dans la zone de la denture du pignon intermédiaire.

2. Cassette à bande magnétique (1) suivant la revendication 1, caractérisée en ce que sur l'une des faces planes du noyau de bobinage (12) sont formés des segments dentés (11), dont la géométrie se rapproche d'une développante entre le cercle primitif et le cercle de tête et dont la partie située entre le cercle primitif et le cercle de pied est sectionnée.

3. Cassette à bande magnétique (1) suivant la revendication 1, caractérisée en ce que la denture frontale (10) du pignon intermédiaire (8) se rapproche d'une denture à développante, mais est très profonde dans la zone du cercle de pied des dents.

4. Cassette à bande magnétique (1) suivant la revendication 1 à 3, caractérisée en ce que le pignon (5) de la broche possède une denture semblable à une denture en développante, un côté des dents (6) étant respectivement arrondi sur la largeur complète du pignon (5) de la broche.

5. Cassette à bande magnétique (1) suivant l'une des revendications précédentes, caractérisée en ce que la largeur du pignon (5) de la broche est égale à 1,5 fois la largeur des intervalles entre dents au niveau du cercle primitif du pignon intermédiaire (8).

6. Cassette à bande magnétique (1) suivant l'une des revendications précédentes, caractérisée en ce que la broche filetée (3) possède un filetage ayant un pas linéaire ou non linéaire.

7. Cassette à bande magnétique (1) suivant l'une des revendications précédentes, caractérisée en ce qu'une première échelle permet une indication linéaire proportionnelle au temps et qu'une seconde échelle permet une indication non linéaire, proportionnelle au temps.

8. Cassette à bande magnétique (1) suivant l'une des revendications précédentes, caractérisée en ce que les deux échelles possèdent des indications non linéaires, proportionnelles au temps.

9. Cassette à bande magnétique (1) suivant l'une des revendications précédentes, caractérisée en ce que l'élément d'affichage (2) se déplace du côté d'enroulement au côté de déroulement de la cassette.

10. Cassette à bande magnétique (1) suivant la revendication 1, caractérisée en ce que sur une face plane du pignon intermédiaire (8) est disposée, à la place de la rainure en spirale (9), une élévation en spirale (9′), qui est entourée par les dents (6) du pignon (5) de la broche.
